# EUROPÄISCHE PATENTSCHRIFT

(11) **EP 0 504 100 B1**
(45) Veröffentlichungstag und Bekanntmachung des Hinweises auf die Patenterteilung: **10.04.1996**
(21) Anmeldenummer: 92810134.4
(22) Anmeldetag: 25.02.1992
(51) Int. Cl.: B23B 31/11, B23D 77/04

(54) **Reibahle mit auswechselbarem Schneidkopf**
Reamer with exchangeable cutting head
Alésoir à tête de coupe interchangeable

(30) Priorität: 13.03.1991 CH 755/91
(43) Veröffentlichungstag der Anmeldung: 16.09.1992
(73) Patentinhaber: POLYTOOL AG, CH-2544 Bettlach (CH)
(72) Erfinder: Vig, Istvan, CH-2544 Bettlach (CH)
(74) Vertreter: Fischer, Franz Josef

(56) Entgegenhaltungen:
- CH-A- 666 643
- GB-A- 1 160 769
- US-A- 1 439 567
- US-A- 2 796 264
- US-A- 3 320 833

## Beschreibung

Die Erfindung betrifft eine Reibahle mit auswechselbarem Schneidkopf gemäss dem Oberbegriff des Anspruches 1.

Derartige Reibahlen sind bekannt. So zeigt beispielsweise die US-A 3 320 833 eine Reibahle mit auswechselbarem Schneidkopf, wobei der Reibahlenschaft eine kegelförmige Aufnahme und einen ringförmigen Ansatz aufweist. In die kegelförmige Aufnahme lässt sich ein entsprechend geformter Teil des Schneidkopfes einsetzen, der mit Schultern versehen ist, die sich auf dem ringförmigen Ansatz abstützen. Durch diese Abstützung wird der Reibahlenkopf bezüglich des Reibahlenschaftes ausgerichtet. Diese Ausrichtung ist jedoch nicht sehr genau und spielfrei, insbesondere im Zusammenwirken mit dem Kegelsitz zwischen Reibahlenschaft und Schneidkopf.

Eine ähnliche Einrichtung zeigt die CH-PS 574 295, worin eine Reibahle mit auswechselbarem Schneidkopf, der mit einem als Konus gebildeten Ansatz versehen ist, dargestellt ist. Dieser Konus des Schneidkopfes wird in eine entsprechend geformte Aufnahmeöffnung im Reibahlenschaft eingeführt. Der Schneidkopf wird über einen Schraubenbolzen mit dem Reibahlenschaft verschraubt. Durch den konischen Sitz zwischen Schneidkopf und Reibahlenschaft wird eine spielfreie Verbindung garantiert.

Dieser konische Sitz weist aber den Nachteil auf, dass der Schneidkopf insbesondere bei grösseren Vorschubkräften in den Reibahlenschaft eingedrückt wird und sich festklemmt, insbesondere auch weil der konische Sitz selbsthemmend ist. Der Schneidkopf lässt sich nur schwer aus dem Reibahlenschaft herausnehmen, wodurch insbesondere der Verschraubungsstift einem grossen Verschleiss unterworfen ist, und sogar Beschädigungen auftreten können. Bei derartigen Reibahlen mit auswechselbaren Schneidköpfen ist nicht vorgesehen, die Schneidköpfe mit einer Nachstelleinrichtung auszurüsten.

Eine nachstellbare Reibahle ist aus der EP-PS 215 144 ersichtlich. Bei dieser Ausführungsart sind Schneidkopf und Reibahlenschaft aus einem Stück gefertigt, der Schneidkopf ist nicht auswechselbar. Zur Nachstellung des Schneidkopfes ist axial in einer Oeffnung des Schneidkopfes eine Schraube mit einem konisch geformten Kopf angeordnet. Der konisch geformte Kopf dieser Schraube liegt an entsprechend geformten Innenflächen im Schneidkopf der Reibahle an. Durch Anziehen der Schraube wird der Schneidkopf auseinandergepresst. Die Abnützung der Reibahlenschneiden lässt sich durch die Nachstellbarkeit ausgleichen, die Lebensdauer des Werkzeuges wird erhöht.

Bei dieser Ausführung wird das Kühl-Schmiermittel durch eine zentrale Bohrung von hinten durch den Reibahlenschaft in den inneren Teil des Schneidkopfes gebracht. Durch schräg angebrachte feine Bohrungen zwischen den Reibahlenschneiden wird das Kühl-Schmiermittel in den Bereich der Reibahlenschneiden gespritzt. Das Anbringen der Bohrungen zwischen den Reibahlenschneiden ist sehr aufwendig. Es eignet sich weniger bei auswechselbaren Schneidköpfen, da deren Herstellung zusätzlich verteuert würde.

Die Aufgabe der Erfindung besteht darin, eine Reibahle mit auswechselbarem Schneidkopf zu schaffen, bei welcher zwischen Reibahlenschaft und Schneidkopf eine spielfreie Verbindung gewährleistet und, die Gefahr eines Verklemmens der Verbindung eliminiert ist, so dass ein leichtes Lösen des Schneidkopfs aus dem Reibahlenschaft möglich wird.

Erfindungsgemäss erfolgt die Lösung dieser Aufgabe gemäss den Merkmalen des Anspruchs 1.

Des weiteren sollen diese auswechselbaren Schneidköpfe nachstellbar sein. Gleichzeitig soll die Kühl-Schmiermittelzuführung so gestaltet sein, dass jegliche Art von Schneidköpfen anwendbar ist, ohne dass die einzelnen Schneidköpfe mit zusätzlichen Bohrungen versehen sein müssen, und dass trotzdem für jeden Schneidkopf eine optimale Kühlung und Schmierung gewährleistet ist.

Ein optimaler spielfreier Sitz zwischen Reibahlenschaft und Schneidkopf wird erreicht, wenn der Kegel am Reibahlenschaft drei Bereiche, die durch Schleifen vertieft sind, aufweist, und die um je 120° versetzt sind. Beim Einsetzen des Schneidkopfes liegt dessen Kegel an drei Stellen auf dem Gegenkegel des Reibahlenschaftes an, wodurch seine Lage bestimmt ist. Beim Anziehen der Halteschraube werden die Auflagestellen im Kegel des Reibahlenschaftes nach aussen gedrückt. Die nicht anliegenden Bereiche werden dadurch nach innen gezogen. Dadurch verformt sich auch die Wandung des Reibahlenschaftes, wodurch zusätzlich der zylinderförmige Schneidkopfschaft an drei jeweils zwischen den Auflagestellen des Kegels liegenden Bereichen gehalten wird. Der Schneidkopf ist dadurch spielfrei gehalten. Da die Kegelwinkel so gewählt werden, dass keine Selbsthemmung besteht, ist ein Herausnehmen des Schneidkopfes problemlos möglich. Beim Lösen der Halteschraube federt der Kegel des Reibahlenschaftes in seine ursprüngliche Form zurück. Der Schneidkopf wird freigegeben.

Von Vorteil ist weiterhin, dass das Drehmoment nicht über dem Kegelsitz vom Reibahlenschaft auf den Schneidkopf übertragen wird, sondern über ein Mitnahmestück, welches im Reibahlenschaft befestigt ist und mit Nocken versehen ist, die in eine Nut im Schneidkopf hineinragen. Das Mitnahmestück ist gleichzeitig mit einem Innengewinde versehen, in welches das Gewinde der Halteschraube eingreift.

Um das Einschrauben der Halteschraube zu erleichtern, ist das Mitnehmerstück in vorteilhafter Weise mit Spiel im Reibahlenschaft gehalten, so dass es sich an die Halteschraube während des Einschraubvorganges anpassen kann.

Eine weitere vorteilhafte Ausgestaltung der Erfindung wird erreicht, wenn die Halteschraube mit einem kegelförmigen Kopf ausgerüstet ist, welcher an der entsprechend geformten Innenfläche des Schneidkopfes anliegt. Dadurch wird erreicht, dass mit der Halteschraube gleichzeitig der Schneidkopf nachgestellt werden kann, ohne dass zusätzliche Mittel dazu notwendig sind.

In vorteilhafter Weise, weil die Schneidköpfe auswechselbar sind, erfolgt die Zuführung des Kühl-Schmiermittels von aussen, das heisst nicht durch den Schneidkopf. Das Kühl-Schmiermittel tritt aus einer ringförmigen Düse, die im Reibahlenschaft angebracht ist und strömt entlang der Umfangsfläche des Reibahlenschaftes über die Schneidkopfoberfläche bis zu den Schneiden. Ungeachtet der Anordnung der Schneiden im eingesetzten Schneidkopf ist die Kühlung und Schmierung jederzeit optimal.

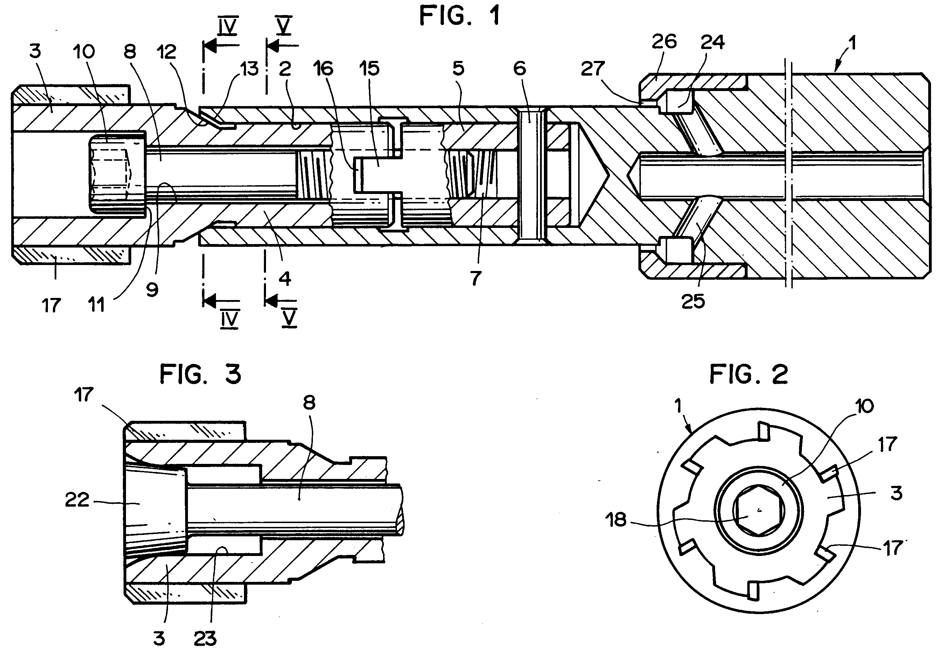

Eine Ausführungsform der Erfindung wird nachfolgend anhand der Zeichnung näher erläutert.
Es zeigt Fig. 1 eine Schnittdarstellung einer Reibahle mit auswechselbarem Schneidkopf ohne Nachstellung
Fig. 2 eine Draufsicht auf eine Schneidkopfausführung
Fig. 3 eine Schnittdarstellung eines Schneidkopfes mit Nachstellung
Fig. 4 einen Schnitt entlang Linie IV-IV gemäss Fig. 1 mit nicht angezogener Halteschraube
Fig. 5a einen Schnitt entlang Linie V-V gemäss Fig. 1 in nicht angezogenem Zustand
Fig. 5b einen Schnitt entlang Linie V-V gemäss Fig. 1 in angezogenem Zustand.

Der Reibahlenschaft 1 gemäss Fig. 1 weist eine koaxiale Oeffnung 2 auf, in welche der Schneidkopfschaft 4 des Schneidkopfes 3 einschiebbar ist. Die koaxiale Oeffnung 2 ist zylinderförmig ausgeführt. Am Grund der koaxialen Oeffnung 2 ist ein Mitnahmestück 5 eingelegt, welches mit einem Querstift 6 gehalten ist, welcher sowohl das Mitnahmestück 5 als auch die Wandung des Reibahlenschaftes durchdringt. Zur Befestigung des Querstiftes 6 ist dieser an seinen Aussenseiten jeweils nietenförmig ausgeweitet. Der Sitz des Querstiftes 6 auf dem Mitnahmestück ist mit Spiel ausgeführt, wie auch das Mitnahmestück 5 gegenüber der Wandung des Reibahlenschaftes 1 ein Spiel aufweist. In das Mitnahmestück 5 ist ein Innengewinde 7 eingearbeitet, in welches die Halteschraube 8 einschraubbar ist.

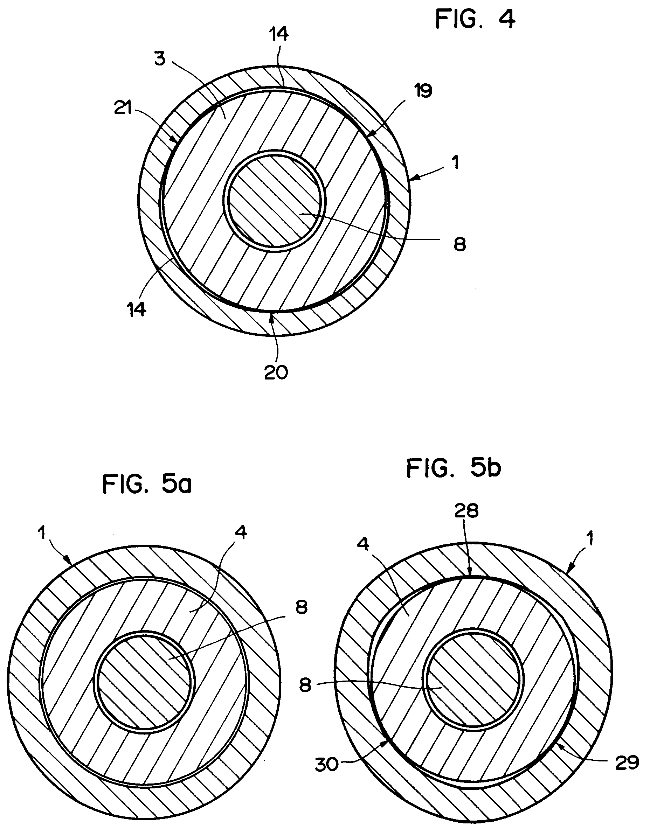

Die Halteschraube 8 ist durch eine koaxiale Oeffnung 9 im Schneidkopf 3 geführt. Mit dem zylinderförmigen Kopf 10 liegt die Halteschraube 8 auf der Ringfläche 11 auf, wodurch sich der Schneidkopf 3 im Reibahlenschaft 1 festschrauben lässt. Am Schneidkopfschaft 4 ist ein Kegel 12 angebracht, der eine Steigung in der Grössenordnung von 45° bis 60° aufweist, und der sich gegen den Schneidkopfschaft hin verjüngt. Die Wandung, die die koaxiale Oeffnung 2 des Reibahlenschafts 1 bildet, ist an ihrem schneidkopfseitigen Ende mit einem Kegel 13 abgeschlossen, der sich nach aussen hin öffnet, und der dem Kegel 12 des Schneidkopfschaftes 1 entspricht. An der Kegelfläche dieses Kegels 13 sind Vertiefungen 14 angebracht, wie aus Fig. 4 ersichtlich ist. Diese Vertiefungen 14 sind an drei Bereichen des Kegels 13, die gegenseitig um einen Winkel von 120° versetzt sind, durch Ausschleifen eingearbeitet, deren Tiefe im Bereich von 0,2 - 0,4 mm liegt.

Das Mitnahmestück 5 weist an seinem dem Schneidkopf 3 zugewandten Ende zwei Nocken 15 auf. Diese Nocken 15 greifen bei eingesetztem Schneidkopf 3 in eine in diesen eingearbeitete Nut 16 ein. Diese formschlüssige Verbindung überträgt das Drehmoment vom Reibahlenschaft 1 auf den Schneidkopf 3. Fig. 2 zeigt eine Ansicht auf den Schneidkopf 3 mit den entsprechend angebrachten Schneidplatten 17. Die Halteschraube 8 weist einen Innensechskant 18 auf, durch welchen die Halteschraube 8 ein- und ausschraubbar ist.

Zum Einsetzen eines Schneidkopfes 3 in einen Reibahlenschaft 1 wird der Schneidkopfschaft 4, der eine zylindrische Form aufweist, in die zylinderförmige koaxiale Oeffnung 2 des Reibahlenschaftes 1 gleitend eingeführt. Der Schneidkopf 3 muss so verdreht werden, dass die Nokken 15 des Mitnahmestückes 5 in die Nut 16 des Schneidkopfschaftes 4 eingreifen. Der Kegel 12 des Schneidkopfschaftes 4 und der Kegel 13 des Reibahlenschaftes 1 liegen nun aufeinander. Die Halteschraube 8 lässt sich nun in das Mitnahmestück 5 einschrauben.

Die Situation, wie sie im nicht festgeschraubten Zustand in der Auflage der beiden Kegel 12 und 13 vorliegt, ist in Fig. 4 dargestellt. Der Kegel 12 des Schneidkopfes 3 liegt lediglich an drei Bereichen 19, 20 und 21 am Kegel 13 des Reibahlenschaftes 1 an. Bei den Vertiefungen 14, die vergrössert dargestellt sind, besteht ein Zwischenraum.

Der Schneidkopfschaft 4 liegt in der koaxialen Oeffnung 2 des Reibahlenschaftes 1, wie in Fig.5a dargestellt ist. Dabei ist das Spiel zwischen Schneidkopfschaft 4 und koaxialer Oeffnung stark vergrössert gezeichnet.

Beim Anziehen der Halteschraube 8 wird der Kegel 12 des Schneidkopfes 3 in den Kegel 13 des Reibahlenschaftes 1 hineingepresst. Die am Kegel 12 des Schneidkopfes 3 anliegenden Bereiche 19, 20 und 21 des Kegels 13 des Reibahlenschaftes 1 werden dabei radial nach aussen gedrückt. Da die Wandung des Reibahlenschaftes 1 nur eine geringe Dicke in der Grössenordnung von etwa 10 % des Durchmessers hat, den der Reibahlenschaft 1 im Bereich der koaxialen Oeffnung 2 aufweist, entsteht eine auf die nicht anliegenden Bereiche mit den Vertiefungen 14 ausgestatteten Stellen eine Zugkraft, die bewirkt, dass die mit den Vertiefungen 14 ausgerüsteten Bereiche radial nach innen gezogen werden.

Diese Verformung wirkt sich auch auf den dem Schneidkopf 3 zugewandten Endbereich der Wandung des Reibahlenschaftes 1 aus. Die Wandung verformt sich in diesem Bereich dergestalt, ersichtlich aus Fig. 5b, dass die Bereiche 28, 29 und 30 auf den Schneidkopfschaft 4 gepresst werden.

Der Schneidkopf 3 ist dadurch im Reibahlenschaft 1 am Kegel 12, da die mit Vertiefungen 14 versehenen Stellen des Kegels 13 nie zur Anlage mit dem Kegel 12 gelangen, an den drei Bereichen 19, 20 und 21 und am Schneidkopfschaft an den drei Bereichen 28, 29 und 30 spielfrei gehalten. Die Bereiche 28, 29 und 30 der Wandung, die durch die Verformung auf den Schneidkopfschaft gepresst werden, erstrecken sich über eine gewisse Länge des Schneidkopfschaftes 4.

Durch diese Halterung des Schneidkopfes 3 an seinem Kegel 12 und entlang seines zylindrischen Schneidkopfschaftes 4 ergibt sich eine sehr stabile und spielfreie Verbindung zwischen Reibahlenschaft 1 und Schneidkopf 3.

Beim Lösen der Halteschraube 8 geht der elastisch verformte Kegel 13 selbständig in seine ursprüngliche Form zurück, die Wandung des Reibahlenschaftes 1 nimmt ebenfalls seine ursprüngliche Form wieder ein, und da der Winkel der Kegel 12 bzw. 13 so gestaltet ist, dass keine Selbsthemmung auftritt, löst sich der Schneidkopf 3 selbständig aus der Verbindung.

Gemäss Fig. 3 kann die Halteschraube 8 mit einem eine Konusform aufweisenden Kopf 22 ausgerüstet werden. Die Innenfläche 23 des Schraubenkopfloches des Schneidekopfes 3 weisen an ihrem äusseren Ende eine gewölbte Form auf. An dieser gewölbten Form liegt der konische Kopf 22 der Halteschraube 8 auf. Durch Anziehen der Halteschraube 8 wird die vordere Seite des Schneidkopfes 3 auseinandergedrückt, wodurch der Durchmesser des Schneidkopfes 3 vergrössert wird, was der gewünschten Nachstellung entspricht. Diese Nachstellung bewegt sich in einem Bereich von Tausendstel bis Hundertstel Millimeter.

Im vorliegenden Fall wird demzufolge die Halteschraube 8 einerseits zum Befestigen des Schneidkopfes 3 am Reibahlenschaft 1 und andererseits zur Nachstellung des Schneidkopfes 3 benutzt. Beim Anziehen der Halteschraube 8 erfolgt durch die geringe Dicke der Wandung zuerst das Aufweiten des Kegels 13 des Reibahlenschaftes 1, bis eine optimale Verbindung zwischen Schneidkopf 3 und Reibahlenschaft 1 erreicht ist, bevor eine Ausweitung des Schneidkopfes 3, die nicht mehr im Bereich der Durchmessertoleranz der Reibahle liegt, durch den konischen Kopf 22 der Halteschraube erfolgt. Dies ist deshalb der Fall, weil die Kraft zur Verformung des Kegels 13 des Reibahlenschaftes 1 wegen der dünnen Wandung des Reibahlenschaftes 1 viel geringer ist, als die Ausweitung und demzufolge die Nachstellung des Schneidkopfes 3 durch den konischen Kopf 22 der Halteschraube 8.

Durch Auswechseln der Halteschraube 8 mit einem konischen Kopf 22 gegen eine Schraube mit einem zylindrischen Kopf kann beim gleichen Reibahlenschaft 1 auch ein nicht nachstellbarer Schneidkopf 3 eingesetzt werden. In diesem Falle liegt die Halteschraube 8 am flachen Bohrungsgrund des Schneidkopfes 3 an.

Gemäss Fig. 1 erfolgt die Kühl-Schmiermittelzuführung über eine zentrale Bohrung 23 im hinteren Bereich des Reibahlenschaftes 1. Im Reibahlenschaft 1 ist eine umlaufende Nut 24 eingearbeitet, die mit der zentralen Bohrung 23 über Querbohrungen 25 verbunden ist. Ueber die umlaufende Nut 24 ist eine Abdeckkappe 26 geschoben, welche zusammen mit der umlaufenden Nut 24 einen Ringkanal, der gegen hinten abgeschlossen ist, bildet. Gegen den Schneidkopf 3 hin weist die Abdeckkappe 26 eine Ringdüse 27 auf, durch welche das Kühl-Schmiermittel unter Druck entlang der Oberfläche des Reibahlenschaftes 1 bis zum Schneidkopf 3 gespritzt wird. Die Schneidplatten 17 des Schneidkopfes 3 werden dadurch in optimaler Weise mit Kühl-Schmiermittel versorgt, unabhängig davon, wie die Verzahnung der Schneidköpfe ausgeführt ist. Da der Abstand zwischen Schneidplatten 17 des Schneidkopfes 3 zur Ringdüse 27 nicht sehr gross ist, überbrückt der Kühl-Schmiermittelstrahl diese Distanz problemlos.

## Patentansprüche

1. Reibahle mit auswechselbarem Schneidkopf (3) mit einem Reibahlenschaft (1), der einseitig eine koaxiale Oeffnung (2) zur Aufnahme des Schneidkopfschaftes (4) aufweist, mit einer durch eine koaxiale Oeffnung (9) im Schneidkopf geführte und in den Reibahlenschaft einschraubbaren Halteschraube (8) zur Halterung des Schneidkopfes im Reibahlenschaft, mit Mitteln (5, 6, 15, 16) zur Uebertragung des Drehmomentes vom Reibahlenschaft auf den Schneidkopf, und mit einer Kühl-Schmiermittel-Zuführung (24, 25), gekennzeichnet durch die folgenden Merkmale:
- die koaxiale Oeffnung (2) des Reibahlenschaftes (1) zur Aufnahme des Schneidkopfes (3) ist zylinderförmig,
- am Rand des schneidkopfseitigen Endes der koaxialen Oeffnung (2) des Reibahlenschaftes (1) ist ein nach aussen geöffneter Kegel (13) angebracht, dessen Kegelfläche an mindestens zwei Bereichen vertieft ist,
- der Schneidkopfschaft (4) weist einen zylindrischen Teil auf, welcher in die zylinderförmige koaxiale Oeffnung (2) einschiebbar ist,
- der zylindrische Teil des Schneidkopfschaftes (4) ist durch eine einen Kegel (12) bildenden Verdickung abgeschlossen,
- die Halteschraube (8) presst den Kegel (12) des Schneidkopfschaftes (4) auf den Kegel (13) des Reibahlenschaftes (1).

2. Reibahle nach Anspruch 1, dadurch gekennzeichnet, dass der nach aussen geöffnete Kegel (13), der am Rand des schneidkopfseitigen Endes des Reibahlenschaftes (1) angebracht ist, an drei Bereichen (19, 20, 21) je um 120° versetzt vertieft ist.

3. Reibahle nach Anspruch 1 oder 2, dadurch gekennzeichnet, dass im Grund der zylinderförmigen koaxialen Oeffnung (2) des Reibahlenschaftes (1) ein ein Innengewinde (7) aufweisendes Mitnahmestück (5) mit einem die Wandung des Reibahlenschaftes (1) durchdringenden Querstift (6) gehalten ist, welches am dem Schneidkopf (3) zugewandten Ende zwei Nocken (15) aufweist, die bei eingesetztem Schneidkopf (3) in eine Nut (16) eingreifen, die an der hinteren Stirnfläche des Schneidkopfschaftes (4) angebracht ist.

4. Reibahle nach Anspruch 3, dadurch gekennzeichnet, dass das Mitnahmestück (5) mit Spiel in der zylinderförmigen koaxialen Oeffnung (2) des Reibahlenschaftes (1) eingesetzt ist, und dass der Querstift (6) mit Spiel durch die Bohrung des Mitnahmestückes (5) geführt ist.

5. Reibahle nach einem der Ansprüche 1 bis 4, dadurch gekennzeichnet, dass die koaxiale Oeffnung (9) im Schneidkopf (3) ein Senkloch aufweist, in welches zur Verschraubung des Schneidkopfes (3) mit dem Reibahlenschaft (1) eine Halteschraube (8) mit versenkbarem Kopf einsetzbar ist.

6. Reibahle nach einem der Ansprüche 1 bis 4, dadurch gekennzeichnet, dass die koaxiale Oeffnung (9) im Schneidkopf (3) im äusseren Randbereich als kegelige oder als gewölbte, sich gegen innen verjüngende Oberfläche gestaltet ist, dass die Halteschraube (8) eine sich zum Gewindeteil hin verjüngenden Kopf (22) aufweist, der mit der sich verjüngenden Oberfläche zum Anliegen kommt, wodurch mit der Halteschraube (8) neben dem Festhalten des Schneidkopfs (3) im Reibahlenschaft (1) der Schneidkopf (3) noch nachstellbar ist.

7. Reibahle nach einem der Ansprüche 1 bis 6, dadurch gekennzeichnet, dass der Reibahlenschaft (1) einen diesen umlaufende Nut (24) aufweist, die mindestens eine Querbohrung (25) zu einem von hinten in den Reibahlenschaft (1) eingebrachtes Sackloch aufweist, dass die Nut (24) mit einer Abdeckkappe (26) derart umschlossen ist, dass lediglich gegen den Schneidkopf (3) hin durch eine Ringdüse (27) das über Sackloch und Querbohrung (25) in die von Nut (24) und Abdeckkappe (26) gebildeten Ringkanal gepresste Kühl-Schmiermittel entlang des Reibahlenschaftes (1) ausströmbar ist.

## Claims

1. A reamer having an interchangeable cutter head (3), comprising a reamer shank (1) with a coaxial opening (2) at one end for receiving the cutter-head shank (4), a clamping bolt (8) for holding the cutter head in the reamer shank, which clamping bolt is led through a coaxial opening (9) in the cutter head and can be screwed into the reamer shank, means (5, 6, 15, 16) for transmitting the torque from the reamer shank to the cutter head, and a coolant-lubricant supply (24, 25), characterized by the following features:
- the coaxial opening (2) in the reamer shank (1) for receiving the cutter head (3) is cylindrical,
- an outwardly opening cone (13), the tapered surface of which is deepened in at least two areas, is disposed at the edge of the end nearest the cutter head of the coaxial opening (2) in the reamer shank (1),
- the cutter head shank (4) has a cylindrical portion which is insertable in the cylindrical coaxial opening (2),
- the cylindrical portion of the cutter-head shank (4) terminates in a thickening forming a cone (12), and
- the clamping bolt (8) presses the cone (12) of the cutter head shank (4) against the cone (13) of the reamer shank (1).

2. Reamer according to claim 1, characterized in that the outwardly opening cone (13) disposed at the edge of the end of the reamer shank (1) nearest the cutter head is deepened at three areas (19, 20, 21) each offset by 120°.

3. Reamer according to claim 1 or 2, characterized in that a follower piece (5) having an internal thread (7) and having a transverse pin (6) passing thorugh the wall of the reamer shank (1) is held at the bottom of the cylindrical coaxial opening (2) of the reamer shank (1), which follower piece has at the end nearest the cutter head (3) two cans (15) which, when the cutter head (3) is inserted, engage a groove (16) disposed on the rearward end face of the cutter-head shank (4).

4. Reamer according to claim 3, characterized in that the follower piece (5) is inserted with play in the cylindrical coaxial opening (2) of the reamer shank (1), and the transverse pin (6) passes with play through the bore of the follower piece (5).

5. Reamer according to one of the claims 1 to 4, characterized in that the coaxial opening (9) in the cutter head (3) has a hole in which a clamping bolt (8) with a countersinkable head is insertable for screwing the cutter head (3) to the reamer shank (1).

6. Reamer according to one of the claims 1 to 4, characterized in that the coaxial opening (9) in the cutter head (3) takes the form in its outer edge region of a conical or arcuate surface tapering inward, the clamping bolt (8) has a head (22) tapering toward the threaded portion, which head comes to rest against the tapering surface, whereby, by means of the clamping bolt (8), besides the fixing of the cutter head (3) in the reamer shank (1), the cutter head (3) is also expandable.

7. Reamer according to one of the claims 1 to 6, characterized in that the reamer shank (1) has a groove (24) encircling it, which groove has at least one transverse bore (25) to a blind hole pierced into the reamer shank (1) from the rear, and the groove (24) is surrounded by a cover cap (26) in such a way that the coolant-lubricant pressed via the blind hole and transverse bore (25) into the annular duct formed by groove (24) and cover cap (26) through an annular nozzle (27) is dischargeable along the reamer shank (1) merely toward the cutter head (3).

## Revendications

1. Alésoir avec tête de coupe interchangeable (3) comprenant une tige d'alésoir (1), présentant d'un côté une ouverture coaxiale (2) pour loger la tige de la tête de coupe (4), comprenant une vis d'arrêt (8) guidée par une ouverture coaxiale (9) dans la tête de coupe et vissable dans la tige d'alésoir pour maintenir la tête de coupe dans la tige d'alésoir, avec des moyens (5, 6, 15, 16) de transmission du moment de rotation de la tige d'alésoir à la tête de coupe, et avec une amenée de lubrifiant de refroidissement (24, 25), caractérisé par les éléments suivants:
- l'ouverture coaxiale (2) de la tige d'alésoir (1) pour loger la tête de coupe (3) est cylindrique,
- un cône (13) ouvert vers l'extérieur est formé au bord de l'extrémité de l'ouverture coaxiale (2) de la tige d'alésoir (1) du côté de la tête de coupe, la surface du cône étant enfoncée en au moins deux endroits,
- la tige de la tête de coupe (4) présente une partie cylindrique pouvant être insérée dans l'ouverture coaxiale cylindrique (2),
- la partie cylindrique de la tige de la tête de coupe (4) se termine par un épaississement formant un cône (12),
- la vis d'arrêt (8) presse le cône (12) de la tige de la tête de coupe (4) contre le cône (13) de la tige d'alésoir (1).

2. Alésoir selon la revendication 1, caractérisé en ce que le cône ouvert vers l'extérieur (13) formé au bord de l'extrémité de la tige d'alésoir (1) du côté de la tête de coupe est enfoncé en trois endroits (19, 20, 21) de 120°.

3. Alésoir selon la revendication 1 ou 2, caractérisé en ce qu'une pièce d'entraînement (5) présentant un filetage interne (7) est maintenue au fond de l'ouverture coaxiale cylindrique (2) de la tige d'alésoir (1) par une tige perpendiculaire (6) traversant les parois de la tige d'alésoir (1), cette pièce d'entraînement présentant deux saillies (15) engagées lorsque la tête de coupe (3) est insérée dans une gorge (16) formée sur la surface frontale arrière de la tige (4) de la tête de coupe.

4. Alésoir selon la revendication 3, caractérisé en ce que la pièce d'entraînement (5) est insérée dans l'ouverture coaxiale (2) de la tige d'alésoir (1) avec du jeu, et en ce que la tige perpendiculaire (6) est placée avec du jeu dans le perçage a travers la pièce d'entraînement (5).

5. Alésoir selon l'une des revendications 1 à 4, caractérisé en ce que l'ouverture coaxiale (9) dans la tête de coupe (3) comporte un trou perpendiculaire dans lequel une vis d'arrêt (8) à tête inclinable peut être insérée pour visser la tête de coupe (3) avec la tige d'alésoir (1).

6. Alésoir selon l'une des revendications 1 à 4, caractérisé en ce que l'ouverture coaxiale (9) dans la tête de coupe (3) forme dans la région du bord externe une surface se rétrécissant vers l'intérieur de manière conique ou bombée, en ce que la vis d'arrêt (8) présente une tête (22) se rétrécissant vers la partie filetée et mise en contact avec la surface se rétrécissant, permettant ainsi à la vis d'arrêt (8) outre le maintien de la tête de coupe (3) dans la tige d'alésoir (1) d'ajuster encore la tête de coupe (3).

7. Alésoir selon l'une des revendications 1 à 6, caractérisé en ce que la tige d'alésoir (1) comporte une gorge périphérique (24) présentant au moins un perçage transversal (25) parvenant dans un trou borgne ménagé depuis l'arrière dans la tige d'alésoir (1), en ce que la gorge (24) est fermée par un couvercle recouvrant (26) en sorte que le lubrifiant de refroidissement pressé vis le trou borgne et le perçage transversal (25) dans la chambre annulaire formée par la gorge (24) et le couvercle recouvrant puisse seulement s'écouler, le long de la tige d'alésoir (1), contre la tête de coupe (3) à travers une buse annulaire (27).
